# EUROPEAN PATENT SPECIFICATION

(11) **EP 0 672 786 B1**
(45) Date of publication and mention of the grant of the patent: **05.06.2002**
(21) Application number: 95103326.5
(22) Date of filing: 08.03.1995
(51) Int. Cl.: D21G 1/02, F16C 13/00

(54) **Method for fitting the roll mantle of a tubular roll intended for a paper machine or equivalent with glide bearings and a tubular roll that makes use of the method**
Verfahren zum Positionieren des Rollmantels einer rohrförmige Rolle, zum Gebrauch in einer Papier- oder ähnlichen Maschine, mittels Gleitlager und eine Rolle zur Durchführung des Verfahrens
Procédé de positionnement de l'enveloppe d'un rouleau tubulaire, utilisé dans une machine à papier ou équivalent, au moyen de paliers à glissement et rouleau tubulaire utilisant le procédé

(30) Priority: 09.03.1994 FI 941107; 29.04.1994 FI 941991; 22.02.1995 FI 950814
(43) Date of publication of application: 20.09.1995
(60) Divisional application: 99116053.2
(73) Proprietor: Metso Paper, Inc., 00130 Helsinki (FI)
(72) Inventor: Niskanen, Juhani, SF-90640 Oulunsalo (FI); Kivioja, Pekka, SF-40950 Muurame (FI); Lahtinen, Juha, SF-40720 Jyväskylä (FI); Lensu, Esa, SF-40530 Jyväskylä (FI); Salavamäki, Esa, SF-40950 Muurame (FI)
(74) Representative: Tiedtke, Harro, Dipl.-Ing.

(56) References cited:
- WO-A-88/03611
- CH-A- 472 590
- DE-A- 3 941 965
- GB-A- 2 036 252
- GB-A- 2 049 516
- US-A- 4 651 547
- US-A- 5 060 357
- US-A- 5 063 649
- US-A- 5 111 563
- PATENT ABSTRACTS OF JAPAN vol. 7 no. 211 (M-243) ,17 September 1983 & JP-A-58 107201 (MITSUBISHI JUKOGYO KK) 25 June 1983,

## Description

The invention concerns a method for fitting a tubular roll mantle of a roll intended for a paper machine or equivalent with glide bearings, in which method the roll mantle is supported on a stationary roll axle by means of hydraulic glide bearing elements acting upon the roll mantle or upon the roll ends of the roll, said bearing elements being loaded hydraulically by means of the pressure of a pressure medium.

Further, the invention concerns a tubular roll for a paper machine or equivalent, the roll mantle of said roll being supported revolvingly on a stationary roll axle by means of glide bearing elements that act upon the inner face of the roll mantle and/or upon the roll ends of the roll, said glide bearing elements being loaded by means of the pressure of a hydraulic pressure medium.

The tubular rolls in paper machines are ordinarily mounted on the roll axle by the ends of the roll mantle by means of roller bearings. Such a conventional mode of journalling has its advantages, for example the fact that the journalling can be accomplished quite simply, and so far its costs have been considered to be relatively moderate. Such a conventional mode of journalling, in which the roll mantle is journalled on the axle permanently by its ends, is, however, not suitable for even nearly all objects of use in paper machines. In quite a number of cases, the roll mantle must be able to move radially in relation to the roll axle, which property is quite often required, e.g., from variable-crown rolls which are in nip contact with a back-up roll. Besides the fact that, by means of the crown variation means in a variable-crown roll, attempts are made to shape the roll mantle in the desired way especially in view of regulation of the profile of linear load, the roll ends must also be able to move in the radial direction in relation to the axle in order that the profile of linear load could also be controlled in the end areas of the roll. In addition to the profile-regulation properties in the end areas of the roll, the regulation of the loading in the end areas of the roll also affects the control of the temperatures in the end areas of the roll.

This is why such rolls have also been developed in which the whole roll mantle can move in the direction of loading radially in relation to the roll axle. One roll of this type is described in the applicant's earlier **EP Patent No. 0,332,594,** wherein the end bearings of the variable-crown roll are not mounted directly on the central axle of the roll, but the bearings are fitted on separate annular parts, which can move radially in relation to the roll axle. The variable-crown roll in accordance with said publication is a nip roll, and the radial movement of the roll mantle is confined to the direction of the nip plane. The movement has been accomplished so that hydraulic power units have been fitted between said annular parts and the roll axle, which power units shift the end bearings by means of a hydraulic pressure medium towards the nip or away from the nip. The principal object of this solution is to open and to close the nip. There is also a great number of other rolls of similar type, which produce a substantially corresponding action while being accomplished by means of a somewhat different technique.

The fitting of a roll with roller bearings also produces considerable drawbacks and/or problems for the manufacture and operation of the roll. It is one drawback that the roller bearings require certain machining of the roll mantle. The wear of the bearings may also result in problems and, further, the roller bearings impose their restrictions in respect of the oil or fluid to be used in the roll. For example, the following properties can be considered as the weak points of the conventional mode of journalling.
- Restrictions of speed: Even at present, the speeds of rotation of the rolls exceed the maximum permitted speeds specified by bearing manufacturers.
- Precision of rolling: With the present technology, it is very difficult to increase the rolling precision of an assembled roll further. In a traditional roll, even if all the components (bearings, bearing spaces, outer face of mantle) are machined as precisely as possible, the defects are summed up in an assembled roll.

Fitting of a roll mantle with glide bearings is also known in the prior art. Such rolls with glide bearings are described, e.g., in the US Patents **5,060,357** and **5,111,563.** In the roll in accordance with the US Patent **5,060,357,** the roll mantle is provided with roller bearings fitted in the areas of its end pieces, said bearings being fitted on separate ring parts of a type similar to those described in said EP Patent **0,332,594.** The roll is meant to be a nip roll, and its roll mantle can move in the direction of the nip plane in relation to the axle, e.g., for the purpose of opening and closing the nip. The lateral support of the roll mantle, i.e. the support in the direction transverse to the nip plane, is arranged by means of quite a complicated construction of glide bearings, by whose means attempts are made to make the movement of the roll mantle take place exactly in the direction of the nip plane. It is a drawback of the construction that it is exactly complicated, for example, with a number of glide faces and arrangements of articulated joints, for which reason the reliability in operation, controllability, and the dependability of the construction cannot be considered to be very good. It is a further problem of the solution in accordance with the US Patent **5,060,357** that, by means of the equipment, for example, forces transverse to the nip plane and applied to the roll from outside cannot be compensated for, because such forces cause a disruption of the oil film between the glide shoes and the inner face of the roll mantle.

In the US Patent **5,111,563,** an arrangement of lateral support of a roll with glide bearings is described, which arrangement is simpler than the solution of the US Patent mentioned above earlier. In this solution, the arrangement of the glide bearings in the lateral direction is, however, accomplished by means of an arrangement of articulated joints that is likewise not capable of compensating for lateral forces applied to the roll from outside.

The object of the present invention is to provide a method of a novel type for fitting the roll mantle of a tubular roll intended for a paper machine or equivalent with glide bearings and a tubular roll that makes use of the method, by means of which method and roll some of the drawbacks involved in the prior art are avoided and by whose means, at the same time, an essential improvement is achieved as compared with existing methods and constructions as well as compared with the controllability of existing rolls.

In view of achieving this, the method in accordance with the present invention is characterized in that the roll mantle is supported on the roll axle by means of glide bearing elements acting radially and/or axially in opposite directions, so that, when an outside force that shifts or attempts to shift the roll mantle is applied to the roll mantle, the pressure in the glide bearing element placed at the side of the higher loading is adjusted to a level higher than the pressure in the glide bearing element acting in the opposite direction so that the outside forces are neutralized.

On the other hand, the roll in accordance with the invention is characterized in that the roll mantle is supported on the roll axle by means of glide bearing elements loaded radially and/or axially in opposite directions, which glide bearing elements are connected with a regulation device or with a corresponding regulation valve, which is arranged to distribute the pressures in the glide bearing elements acting in opposite directions so that the force components of the forces applied to the roll mantle from outside that are parallel to the directions of action of the glide bearing elements are neutralized.

By means of the present invention, a number of remarkable advantages are obtained, compared with the prior art, and of these advantages, in this connection, for example, the following should be stated. The mode of journalling by means of glide bearings in accordance with the invention permits controlled movements of the roll mantle without outside control. Further, by means of the solution, a very precise positioning of the roll mantle is achieved. The glide bearing arrangement automatically adjusts the position of the roll mantle to the correct position if, for some reason, the position of the mantle differs from its preset value. The journalling of the roll is accomplished by means of hydraulic glide bearing elements so that, owing to the mode of regulation, the consumptions of fluid and power are very low. Owing to the mode of mounting by means of glide bearings, the forces acting from the glide bearing elements upon the roll mantle can also be easily minimized. Further, the mode of journalling by means of glide bearings in accordance with the invention protects the fluid films of the glide bearing elements also in the areas of extreme positions of the roll mantle. The mode of carrying out is, in the present invention, quite simple and, thus, reliable in operation. The further advantages and characteristic features of the invention come out from the following detailed description of the invention.

In the following, the invention will be described by way of example with reference to the figures in the accompanying drawing.

Figure 1 is a fully schematic sectional side view of a roll fitted with glide bearings in accordance with the invention, which roll is a variable-crown roll in the exemplifying embodiment shown in Fig. 1.

Figure 2 is a schematic sectional view taken along the line II-II in Fig. 1.

Figure 2A is a schematic perspective view of an exemplifying embodiment of a preferred construction of the axial support.

Figure 3 is a more detailed and partly sectional view of a first embodiment of the lateral support of a roll fitted with glide bearings in accordance with the invention.

Figure 3A is a more detailed illustration of a regulation device used for the lateral support of the roll mantle of the roll as shown in Fig. 3.

Figure 4 is an illustration corresponding to Fig. 3 of a second embodiment of the lateral support of the roll mantle.

Figure 5 is an illustration corresponding to Figs. 3 and 4 of a third embodiment of the lateral support of the roll mantle.

Figure 6 is an illustration corresponding to Figs. 3 to 5 of a fourth embodiment of the lateral support of the roll mantle.

Figure 7 is a fully schematic illustration of a position to which the roll in accordance with the invention can be applied.

Figure 8 is an axial and partly sectional view of the axial support of the roll mantle and of the control of the movements of the roll mantle in the axial direction.

Figure 9 is an illustration corresponding to Fig. 8 of a second embodiment of the axial support of the roll mantle.

Figure 10 is an illustration corresponding to Figs. 8 and 9 of a third embodiment of the axial support of the roll mantle.

Figure 11 is an illustration corresponding to Figs. 8 to 10 of a fourth embodiment of the axial support of the roll mantle.

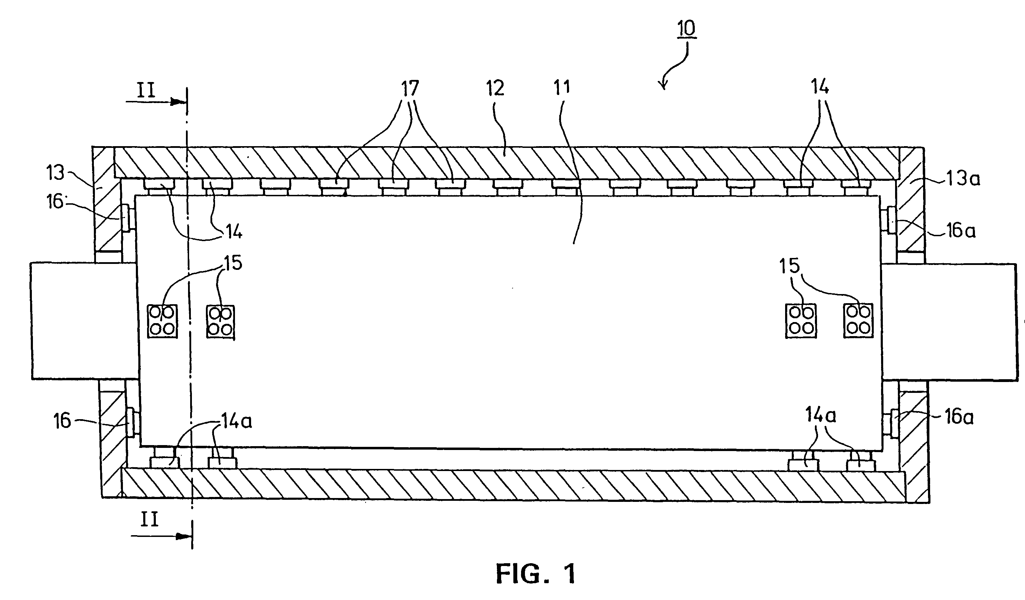

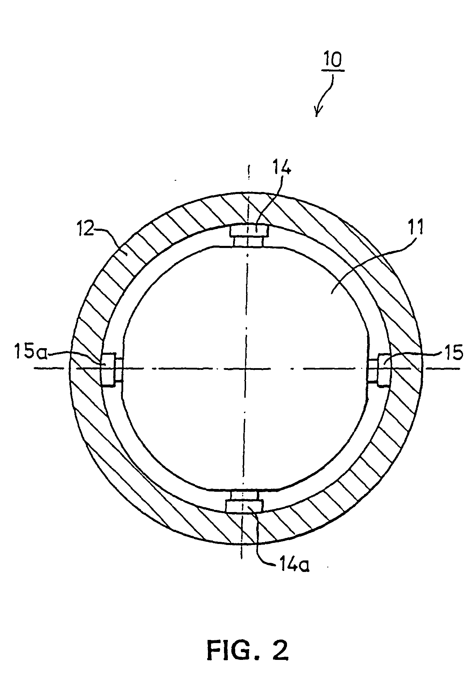

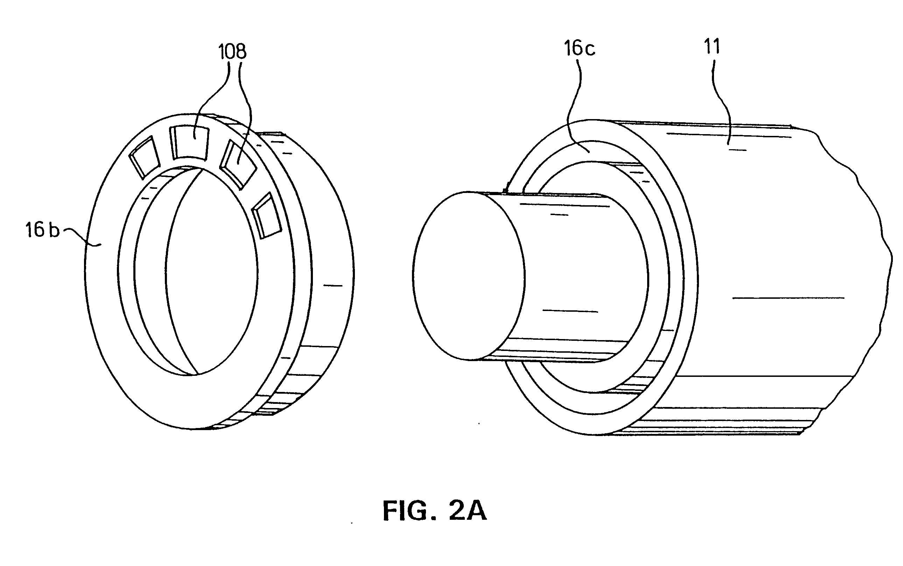

Thus, Figs. 1 and 2 are fully schematic sectional views of a tubular roll fitted with glide bearings in accordance with the invention so that Fig. 1 is an axial sectional view in the vertical plane of the roll, and Fig. 2 is a sectional view of the roll as shown in Fig. 1, taken along the line II-II. In Figs. 1 and 2, the roll is denoted generally with the reference numeral 10, and in these embodiments the roll 10 is a variable-crown roll, which comprises a stationary roll axle 11, on which the roll mantle 12 is fitted revolving, said roll mantle being supported on the roll axle by means of hydraulic loading elements 17. The hydraulic loading elements 17 are effective in the direction of the nip plane, and by their means it is possible to adjust the shape of the roll mantle 12 and to control the nip profile of the roll in the axial direction of the roll.

The roll 10 as shown in Figs. 1 and 2 is a roll provided exclusively with glide bearings, so that the roll 10 has no conventional roller bearings fitted at the roll ends at all. The journalling of the roll 10 has been accomplished by means of glide bearing elements, of which elements the glide bearing elements that are effective in the direction of loading, i.e. in the direction of the nip plane in the case of the roll as shown in Figs. 1 and 2, are denoted with the reference numerals 14 and 14a. The first glide bearing elements 14 are effective in the direction of the nip, i.e. against the loading, and the second glide bearing elements 14a in the opposite direction. In the exemplifying embodiment shown in Figs. 1 and 2, it is shown further that the roll 10 is also provided with glide bearing elements 15,15a effective in the direction transverse to the loading direction, said elements 15,15a being effective in opposite directions. Since the roll 10 is a roll that is fitted exclusively with glide bearings, it is also provided with glide bearing elements 16,16a effective in the axial direction in opposite directions, said elements 16,16a being supported by the intermediate of a fluid film against the roll ends 13,13a. As is shown in Figs. 1 and 2, the glide bearing elements 14,15,14a,15a effective in the radial direction are supported against the inner face of the roll mantle 12 by the intermediate of a fluid film. In the illustration of Fig. 1, the glide bearing elements 14,14a,15,15a effective in the radial direction are arranged in pairs so that there are two pieces of each glide bearing element, which are placed side by side in the axial direction. In view of the operation, such an arrangement is, however, not an indispensable requirement, for the journalling can also be accomplished, for example, by means of single glide bearing elements alone.

On the other hand, in Fig. 2 it is shown that the glide bearing elements 14,14a,15, 15a are arranged to act in the direction of loading and in the direction transverse to said direction. However, there may also be a higher number of glide bearing elements, which are fitted to act radially in different angular positions. Regarding the axial glide bearing elements, it can be stated further that, differing from Fig. 1, the axial movements of the roll mantle 12 can be controlled by means of just single glide bearing elements 16,16a alone, which are effective in the same plane in opposite directions. On the other hand, there may also be a higher number of such axial glide bearing elements 16,16a, which are, for example, uniformly spaced to act upon the inner faces of the roll ends 13,13a.

In Fig. 2A, a more favourable embodiment of the axial glide bearing elements is shown. According to this embodiment, the axial glide-bearing shoes 16b are annular glide bearings, into whose support face, which is supported against the roll end 13,13a, fluid pockets 108 have been formed. Similarly, into the roll axle 11, an annular groove 16c has been formed, in which the "piston part" of the glide bearing element 16b is fitted. The axial support can also be arranged so that glide bearing elements 16b are supported against the same roll end 13 from opposite sides, in which case axial glide bearings are not needed at the opposite end of the roll.

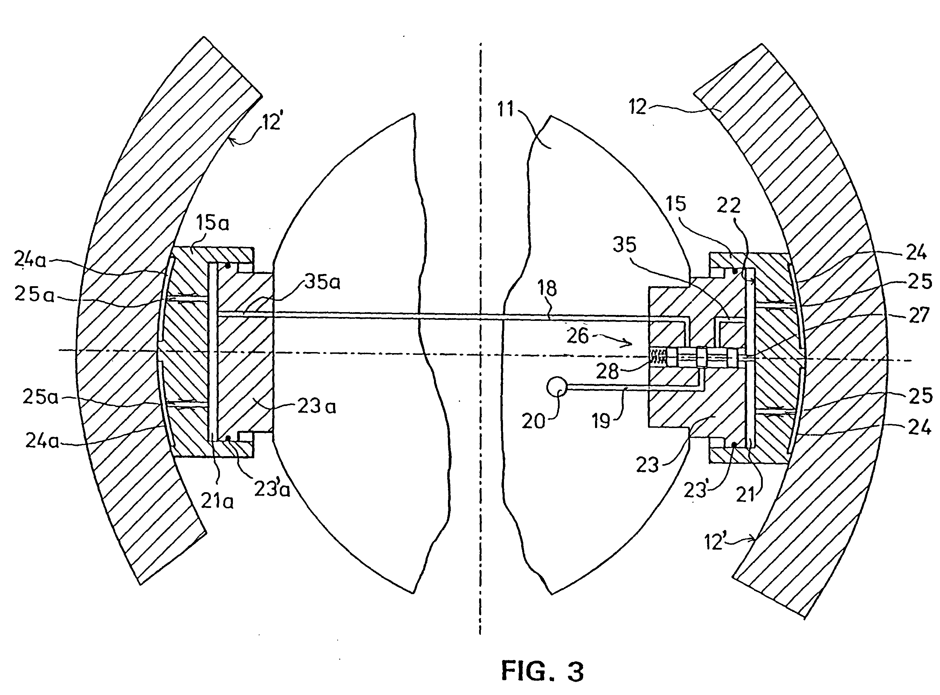

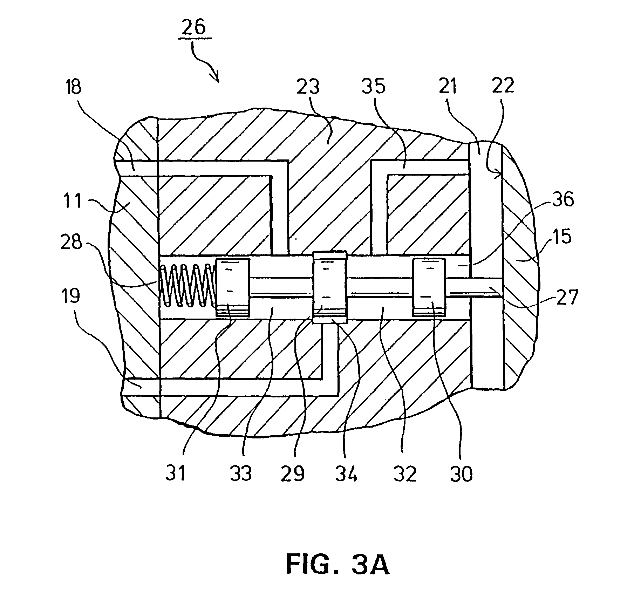

Fig. 3 is a schematic sectional view of a first embodiment of the support of the roll mantle 12 in the direction transverse to the loading direction. As is the case in Figs. 1 and 2, so also in Fig. 3, the roll mantle is denoted with the reference numeral 12 and the roll axle with the reference numeral 11. To begin with, the general construction of the solution used for lateral support of the roll mantle 12 will be described. As was already stated earlier, the roll mantle 12 is supported on the roll axle 11 by means of bearing shoes 15,15a fitted in the direction transverse to the loading direction, which bearing shoes 15,15a act in opposite directions. As regards their operation, the glide bearing elements 15,15a are conventional, so that said glide bearing elements 15,15a are supported against the inner face 12' of the roll mantle by the intermediate of a fluid film.

In the illustration in Fig. 3, frame pieces 23,23a are mounted on the roll axle 11, and the glide bearing elements 15,15a are provided with cavity spaces 21,21a to be pressurized by means of a hydraulic pressure medium, said frame pieces 23,23a being fitted to penetrate into said cavity spaces. The frame pieces 23,23a are sealed by means of the seals 23',23'a in relation to the cavity spaces 21,21a in the glide bearing elements 15,15a. Into the outer faces of the glide bearing elements 15,15a, fluid pockets 24,24a have been formed in the conventional way, which fluid pockets communicate through capillary bores 25,25a with the cavity spaces 21,21a to be pressurized. Thus, pressure medium that is used for the loading of the glide bearing elements 15,15a passes out of the cavity spaces 21,21a through the capillary bores 25,25a into the fluid pockets 24,24a to form a fluid film between the glide bearing elements 15,15a and the inner face 12' of the roll mantle. The pressure medium used for the loading of the glide bearing elements 15,15a is introduced into the roll along the central duct 20, from it is passed to the glide bearing elements 15,15a through the feed duct 19. The feed duct 19 does, however, not communicate directly with the glide bearing elements 15,15a, but the roll is provided with a regulation device 26, which distributes the pressure medium to the glide bearing elements 15,15a.

In the embodiment of Fig. 3, said regulation device 26 is fitted in the frame piece 23 of the first glide bearing element 15, and from this regulation device 26 the pressure medium is passed into the cavity space 21 of the first glide bearing element 15 along the pressure duct 35, and into the cavity space 21a of the second glide bearing element 15a along the connecting duct 18 and along the pressure duct 35a which has been formed into the frame piece 23a of the second glide bearing element 15a.

The construction and the operation of the regulation device 26 are described in more detail in relation to Fig. 3A. The regulation device 26 comprises a valve, which is composed of a three-part slide 29,30,31 fitted in the bore 36 which has been formed into the frame piece 23 of the first glide bearing element 15. The middle part 29, the first end part 30, and the second end part 31 of the slide communicate with one another through the spindle 27, and said slide parts 29,30,31 are placed at a distance from one another so that flow passages 32,33 for the pressure medium remain between the slide parts. The first flow passage 32 communicates through the pressure duct 35 with the cavity space 21, and in a corresponding way, the second flow passage 33 communicates with the cavity space 21a of the second glide bearing element 15a through the connecting duct 18 and through the pressure duct 35a that has been formed into the frame piece 23a of the second glide bearing element 15a. Behind the three-part slide 29,30,31 of the regulation device 26, on the bottom of the bore 36, a spring 28 has been installed, which loads the slide 29,30,31 towards the glide bearing element 15 so that the spindle 27 is supported against the bottom 22 of the cavity space. The pressure medium is passed to the regulation device 26 along the feed duct 19, and into the bore 36 an annular groove 34 has been formed at the level of the feed duct 19, through which groove 34 the pressure medium has access in the desired way, through the first and/or the second flow passage 32/33, into the cavity space 21,21a of the first and/or the second glide bearing element. This is just one exemplifying embodiment of a slide construction. In consideration of the same functions, the slide may also be constructed in a different way.

By means of the regulation device 26, as was stated above, the lateral forces applied to the roll are neutralized. The regulation device 26 has been accomplished so that through it the pressure of the pressure medium is controlled to each glide bearing element 15,15a so that a higher pressure is passed to the side of loading to shift the roll mantle 12 against the outside loading. When Fig. 3A is examined, it can be seen that, if an outside loading is applied against the direction of loading of the first glide bearing element 15, the three-part slide 29,30,31 is pushed in Fig. 3A against the spring 28 force to the left, opens the first flow passage 32 and closes the second flow passage 33. In such a case, the pressure of the pressure medium coming from the feed duct 19 is passed through the first flow passage 32 and through the pressure duct 35 into the cavity space 21 of the first glide bearing element 15, at the same time as the middle part of the slide prevents access of the pressure into the cavity space 21a of the second glide bearing element 15a. Thus, a higher pressure is passed into the cavity space 21 of the first glide bearing element 15, whereby said pressure corrects the position of the mantle to the correct position.

The construction of the regulation device 26 is such that even a very little movement of the roll mantle 12 controls the flow and the pressure in the desired way. As is shown in Fig. 3A, this is accomplished simply so that the axial length of the middle part 29 of the slide is slightly shorter than the axial length of the annular groove 34 that has been formed into the bore 36. When the length of the middle part 29 of the slide is substantially equal to the axial length of the annular groove 34 that has been formed into the bore 36, for example, by means of the shape of the middle part 29 of the slide as shown in the figure, it is achieved that, in the middle position shown, fluid has access to both of the glide bearing elements 15,15a. Immediately when the slide 29,30,31 is shifted away from the middle position shown in Fig. 3A, the flow passage is opened to one of the cavity spaces 21,21a, at the same time as the flow passage to the opposite cavity space is closed. Thus, the regulation device 26 reacts immediately and without delay to the movements of the roll mantle 12.

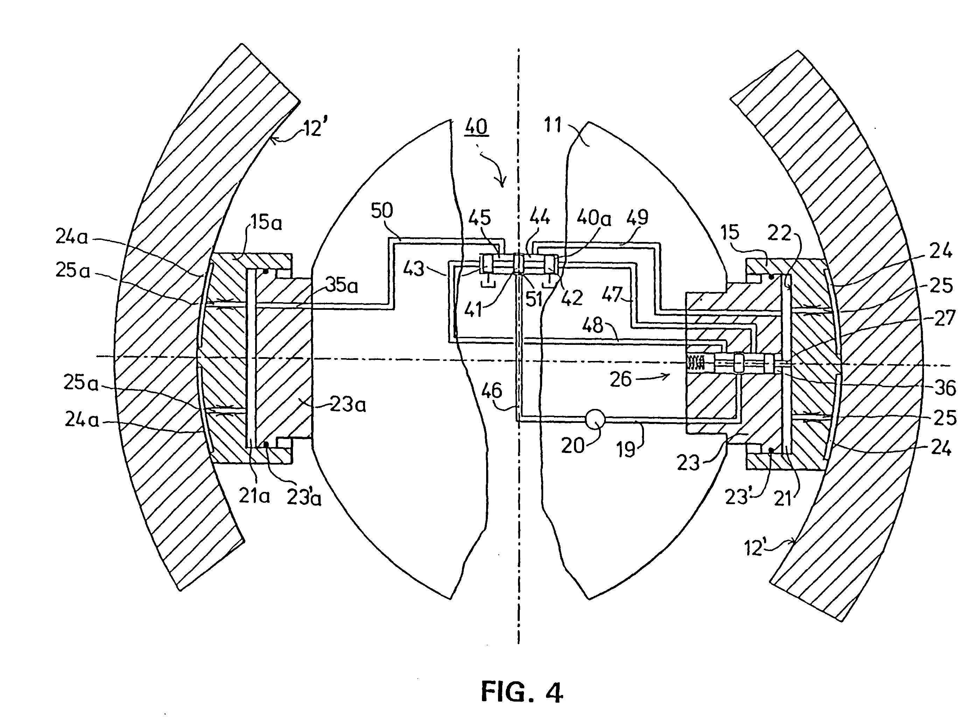

Fig. 4 shows a second embodiment of the lateral support of the roll mantle in a roll fitted with glide bearings. The solution shown in Fig. 4 differs from that shown in Fig. 3 in the respect that the embodiment of Fig. 4 is provided with a pre-control of the lateral support, and therefore the solution will be described here in its entirety. Also, in Fig. 4, the roll mantle of the roll fitted with glide bearings is denoted with the reference numeral 12, and the roll axle with the reference numeral 11. Also in this embodiment, the roll is provided with glide bearing elements 15,15a acting in the direction transverse to the loading direction and, as in the embodiment of Fig. 3, also acting in directions opposite to one another. The glide bearing elements 15,15a comprise a frame piece 23,23a, which is attached to the roll axle 11 and on which the glide bearing element 15,15a itself is fitted so that the frame piece 23,23a penetrates into the cavity space 21,21a that has been formed into the glide bearing element 15,15a and that can be pressurized, the frame piece 23,23a being sealed by means of the seal 23',23'a in relation to said cavity space 21,21a. Into the outer face of the glide bearing elements 15,15a, oil pockets 24,24a have been formed, which communicate with the pressurized cavity space 21,21a in the glide bearing element through the capillary bores 25,25a. Pressure medium that is used for pressurizing the glide bearing elements 15,15a, in particular oil, is passed through the capillary bores 25,25a into the oil pockets 24,24a to form a fluid film between the glide bearing elements 15,15a and the inner face 12' of the roll mantle.

Into the frame piece 23 of the first glide bearing element 15, a regulation device 26 similar to that described in connection with the embodiments shown in Figs. 3 and 3A has been formed. Thus, said regulation device 26 comprises a bore 36, which has been formed into the frame piece 23 of the first glide bearing element 15 and into which a three-part slide 29,30,31 has been fitted in the way shown in Fig. 3A. The slide 29,30,31 is provided with a spindle 27, which rests against the bottom 22 of the cavity space in the first glide bearing element, and a spring 28 is fitted on the bottom of the bore 36, which spring loads the slide against said bottom 22 of the cavity space. The regulation device 26 is provided with two flow passages 32,33, which are defined by the middle part 29 of the slide and by the first end part 30, on one hand, and by the second end part 31, on the other hand. When the slide 29,30,31 is in the middle position shown in Fig. 4, both of the flow passages communicate through the annular groove 34 and the feed duct 19 with the central duct 20, through which the pressure medium is fed to the glide bearing elements 15,15a.

The regulation device 26 does, however, not distribute the pressure medium directly to the glide bearing elements 15,15a depending on the position of the slide 29,30,31 of the regulation device 26 but, in the embodiment of Fig. 4, the roll is additionally provided with a regulation valve 40. The regulation device 40 comprises a three-part slide 41,42,43 that moves in the bore 40a, the middle part 41 and the end parts 42 and 43 of the slide defining a first flow passage 44 and a second flow passage 45 between them. The regulation valve 40 is provided with a pressure-feed duct 46, which communicates with the same middle duct 20 through which pressure medium is fed to the regulation device 26. When the slide 41,42,43 of the regulation valve 40 is in the middle position shown in Fig. 4, pressure medium has access through the pressure-feed duct 46 in the regulation valve into the annular groove 51 that has been formed into the bore 40a and from said groove further to each flow passage 44,45. When the slide 41,42,43 is shifted away from the middle position shown in Fig. 4, e.g. to the left, the middle part 41 of the slide closes the connection of the pressure-feed duct 46 of the regulation valve with the second flow passage 45 and makes the connection more widely open with the first flow passage 44. The first flow passage 44 communicates through the first pressure duct 49 with the cavity space 21 of the first glide bearing element 15, and similarly the second flow passage 45 communicates through the second pressure duct 50 with the pressure duct 35a that has been formed into the frame piece 23a of the second glide bearing element 15a and from said duct 35a further with the cavity space 21a. The first flow passage 32 in the regulation device 26 communicates through the first pressure-control duct 47 with the bore 40a of the regulation valve 40 behind the first end part 42 of the slide, and similarly the second flow passage 33 of the regulation device 26 communicates through the second pressure-control duct 48 with the bore 40a of the regulation valve 40 behind the second end part 43 of the slide.

Also in the case of Fig. 4, the higher pressure is controlled through the regulation device 26 and the regulation valve 40 to the glide bearing element 15,15a at the side from whose direction an outside load is applied to the roll, in which case the glide bearing element placed at this side shifts the roll mantle 12 against the outside load. In practice this takes place so that, for example, when an outside load is applied to the roll from the left as is shown in Fig. 4, attempting to shift the roll mantle 12 to the right in Fig. 4, the slide 29,30,31 of the regulation device 26 is also shifted to the right, being shifted by the spring 28, in which case a connection is opened from the feed duct 19 to the second flow passage 33 and, at the same time, the connection with the first flow passage 32 is closed by the effect of the middle part 29 of the slide. In such a case, the pressure in the feed duct 19 has access through the second flow passage 33 and through the second pressure-control duct 48 so as to act behind the second end part 43 of the three-part slide in the regulation valve 40. The pressure shifts the slide 41,42,43 of the regulation valve 40 to the right in Fig. 4, in which case the middle part 41 of the slide closes the connection from the pressure-feed duct 46 of the regulation valve to the first flow passage 44 of the regulation valve and opens the connection from the pressure-feed duct 46 of the regulation valve to the second flow passage 45 of the regulation valve and from said passage further along the second pressure duct 50 and along the pressure duct 35a present in the frame piece 23a of the second bearing element 15a into the cavity space 21a in the second bearing element 15a. In such a case, in the cavity space 21a of the second glide bearing element 15a, a pressure is formed that is higher than the pressure that is present in the cavity space 21 in the first glide bearing element 15, in which case said higher pressure attempts to correct the position of the roll mantle 12 to the correct position. After the position of the roll mantle 12 has been corrected, the slides 29,30,31 and 41,42,43 both of the regulation device 26 and of the regulation valve 40 return to the middle positions shown in Fig. 4, whereby the situation has again become normal.

Thus, the operation of the embodiment as shown in Fig. 4 is to a great extent similar to that described in Fig. 3, however, with the difference that since, in the embodiment of Fig. 4, a pre-control is used by means of the regulation valve 40, in the embodiment of Fig. 4 no such transverse movement of oscillation of the roll mantle 12 can take place as may be possible in some cases in the embodiment of Fig. 3, in which no pre-control is used. Also, the construction of the regulation valve 40 is such that even a very little movement of the mantle 12 controls the flow and the pressure in the desired way. This has been accomplished in a way similar to that described in relation to Fig. 3A with respect to the regulation device 26, i.e. so that the dimensions of the middle part 41 of the slide in relation to the annular groove 51 and/or the shape of the middle part 41 of the slide has/have been chosen appropriately. Thus, even a very little movement of the slide 41,42,43 controls the flow and the pressure either into the first pressure duct 49 or into the second pressure duct 50.

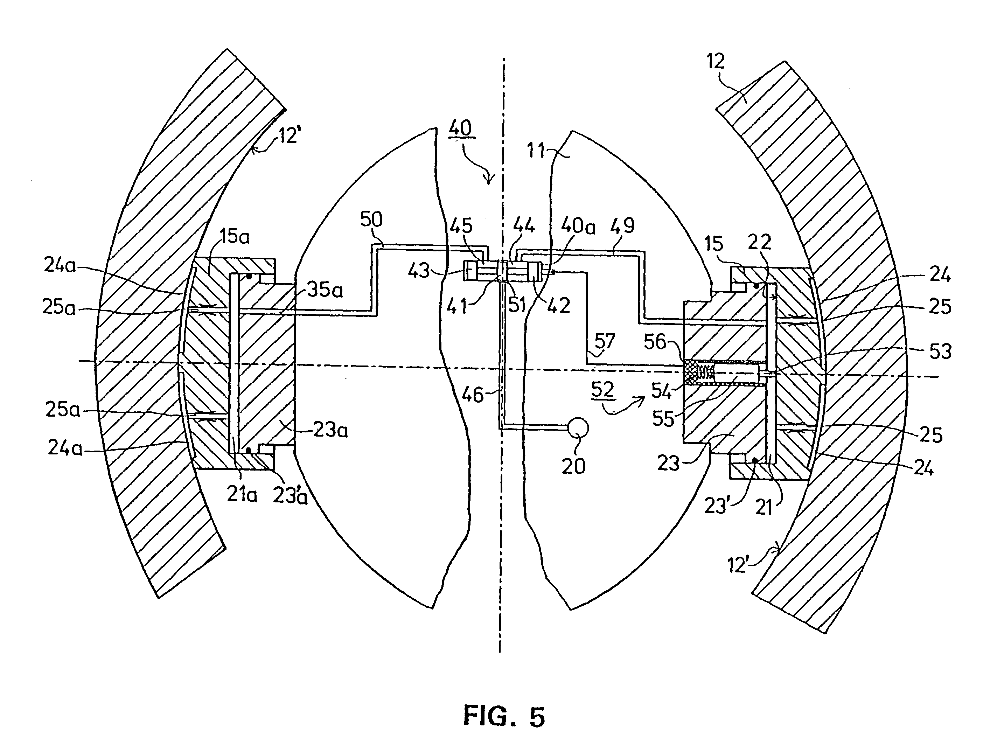

Fig. 5 shows a third embodiment of the lateral support of the roll mantle 12 in a roll provided with glide bearings. The solution in accordance with this embodiment differs from those described above in particular in the respect that the position and the movements of the roll mantle 12 are measured in a way different from the above embodiments. Also in the embodiment of Fig. 5, the roll is provided with glide bearing elements 15,15a acting in the direction transverse to the loading direction in opposite directions, which bearing elements are supported against the inner face 12' of the roll mantle. In this embodiment, as was also described above, the glide bearing elements 15,15a are provided with cavity spaces 21,21a, into which the frame piece 23,23a, which is attached to the roll axle 11, penetrates, said frame piece 23,23a being sealed in relation to said cavity space 21,21a by the intermediate of the seal 23',23'a. Further, the outer faces of the glide bearing elements 15,15a are provided with oil pockets 24,24a, which communicate with the pressurized cavity space 21,21a through capillary bores 25,25a formed through the glide bearing elements 15,15a. Thus, the fluid has access from the cavity space 21,21a through the capillary bores 25,25a into the oil pockets 24,24a to form a fluid film between the glide bearing elements 15,15a and the inner face 12' of the roll mantle.

In the embodiment of Fig. 5, in the frame piece 23 of the first glide bearing element 15, a position-measurement device 52 is fitted, which measures the position of the first glide bearing element 15 in relation to the frame piece 23 and, thus, the position of the roll mantle 12 in relation to the roll axle 11. The position-measurement device 52 comprises a frame 56 of the measurement device, in which a slide 55 is fitted, which is provided with a spindle 53 and which is loaded by means of a spring 54 so that the spindle 53 is supported against the bottom 22 of the cavity space in the first glide bearing element 15. The position-measurement device 52 operates electromagnetically or in some equivalent way. This figure specifically illustrates a solution that operates electromagnetically. The embodiment of Fig. 5 is provided with a regulation valve 40 of a type similar to that used in connection with the embodiment of Fig. 4. The pressure medium that is used for pressurization of the glide bearing elements 15,15a is, thus, passed from the central duct 20 through the pressure-feed duct 46 of the regulation valve into the regulation valve 40, which distributes the flow and the pressure in the desired and intended way to both of the glide bearing elements 15,15a. As a matter of fact, the regulation valve 40 differs from that shown in Fig. 4 exclusively in the respect that, whereas the position of the slide 41,42,43 of the regulation valve 40 was, in the embodiment of Fig. 4, controlled by means of pressure, in the embodiment of Fig. 5 the position of the slide 41,42,43 is controlled electromagnetically. In Fig. 5, this electromagnetic control is illustrated by means of the reference numeral 57, which means an electromagnetic control connection from the position-measurement device 52 to the regulation valve 40.

In the embodiment of Fig. 5, the control of the movements of the roll mantle 12 in the direction transverse to the loading direction takes place so that, for example, in Fig. 5, when an outside load is applied to the roll mantle from the right, the roll mantle 12 attempts to move to the left in Fig. 5, in which case the first glide bearing element 15 and, thus, by the effect of the spindle 53, also the slide 55 of the position-measurement device 52 move to the left in Fig. 5 against the force of the spring 54, thus, by the intermediate of the control connection 57, electromagnetically giving a control command to the slide 41,42,43 of the regulation valve 40 also to shift the slide to the left in Fig. 5. In such a case, the middle part 41 of the slide closes the connection from the pressure-feed duct 46 of the regulation valve through the second flow passage 45, through the second pressure duct 50, and through the pressure duct 35a placed in the frame piece 23a into the cavity space 21a of the second glide bearing element 15a and, in a corresponding way, opens the connection from the pressure-feed duct 46 of the regulation valve through the first flow passage 44 of the regulation valve 40 into the first pressure duct 49 and from it further into the cavity space 21 of the first glide bearing element 15. Thus, the flow into the cavity space 21 of the first glide bearing element 15 becomes larger, and the pressure in the cavity space 21 is also increased. Then, this higher pressure shifts the roll mantle 12 against the outside loading and corrects the position of the roll mantle 12 to the correct position from the position to which it had been shifted by the outside load. Once the position of the roll mantle 12 has been corrected, the slide 41,42,43 of the regulation valve 40 returns to the middle position shown in Fig. 5. The operation is, of course, similar if an outside load is applied to the roll from the opposite direction.

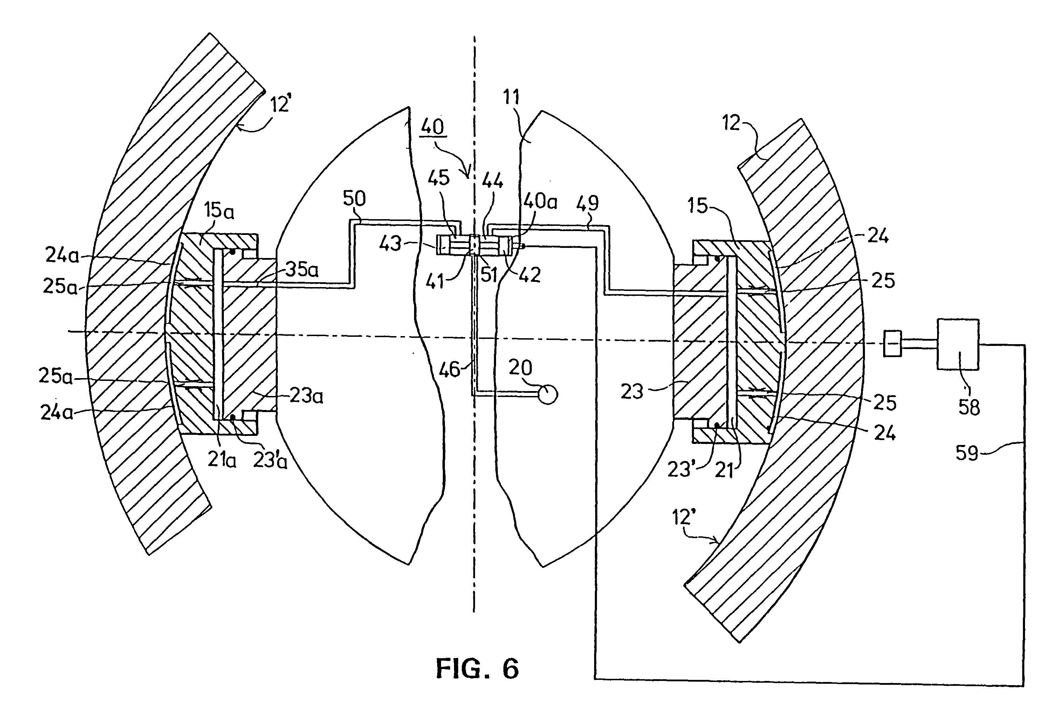

Fig. 6 shows a fourth embodiment of the lateral support of the roll mantle 12 in a roll provided with glide bearings. This embodiment is to a great extent similar to that shown in Fig. 5, so that in the solution of Fig. 6 the roll is provided with glide bearing elements 15,15a similar to those shown in the embodiment of Fig. 5 and, further, in the embodiment of Fig. 6 the roll is provided with a regulation valve 40 similar to that described in relation to Fig. 5. The embodiment of Fig. 6 differs from that shown in Fig. 5 in the respect that, whereas in the embodiment of Fig. 5 the device 52 for measurement of the position of the roll mantle was fitted inside the roll to measure the position of the roll mantle 12 by the intermediate of the first glide bearing element 15, in the solution of Fig. 6 the position-measurement device 58 is fitted outside the roll. From the position-measurement device 58 to the regulation valve 40, there is a fully similar, e.g., electromagnetic control connection 59 as was already described in relation to Fig. 5. In the embodiment of Fig. 6, the measurement device 58 may consist of a contact-free detector, as is shown in Fig. 6, or, differing from the illustration of Fig. 6, the detector may be such that the detector is provided with a follower member, which rests against the outer face of the roll 12 all the time. From the position-measurement device 58, information is transmitted constantly, electromagnetically or in an equivalent way, concerning the position of the roll mantle 12 along the electromagnetic or equivalent control connection 59 to the regulation valve 40, whose operation is identical with that illustrated in Fig. 5. Thus, in the embodiment of Fig. 6, the roll mantle 12 is kept in a fully corresponding way in its correct position, as was already described above.

Referring to the embodiments shown in Figs. 3 to 6, it should be stated that therein just one preferred alternative is described from among various ways in which the glide bearing elements 15,15a can be accomplished and constructed. Thus, the glide bearing elements 15,15a may differ even considerably from the construction shown in Figs. 3 to 6. Further, it should be stated that, even though, in Figs. 4 to 6, the regulation valve 40 has been accomplished as a construction inside the roll, the whole of the regulation valve 40 may also be fitted outside the roll, while the operation of the solution is, nevertheless, identical with that described above. The construction of the regulation valve 40 may also differ from the illustrations as long as it provides a similar operation.

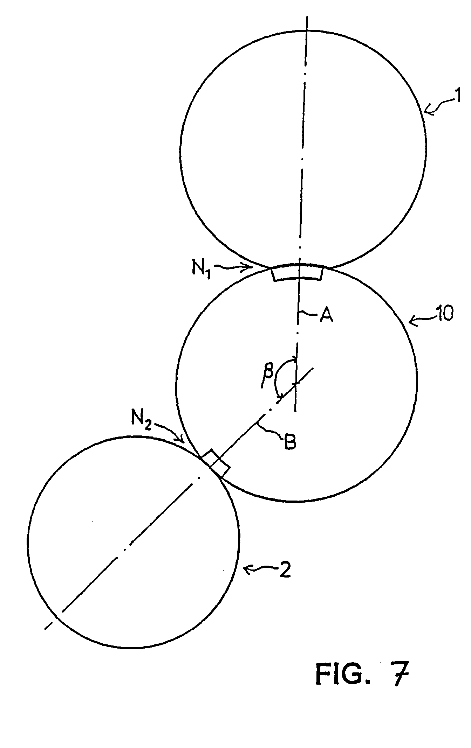

Fig. 7 is a further fully schematic illustration of a possible position in which a roll in accordance with the invention can be applied. In the situation illustrated in Fig. 7, the roll 10 is loaded in the directions of two planes, so that the roll 10 in accordance with the invention forms nips with two back-up rolls 1,2. Thus, in the case of Fig. 7, the roll 10 has two nip planes A and B, which form an angle β with one another. Further, it is shown in Fig. 7 that the first back-up roll 1 is a so-called extended-nip roll, which forms an extended nip N₁ with the roll 10 in accordance with the present invention. In the case of Fig. 7, the other back-up roll 2 is an ordinary back-up roll which forms a nip N₂. Arrangements of other sorts are also possible in respect of the roll in accordance with the invention.

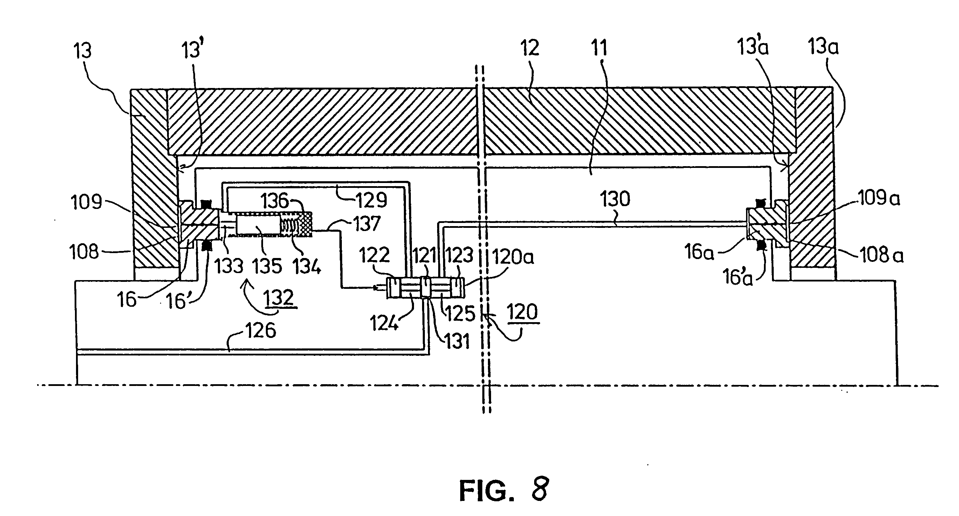

Fig. 8 shows a first embodiment of the axial support of the roll mantle 12 in a roll provided with glide bearings. The mode of axial support is to a great extent similar to the arrangement of support of the roll mantle 12 in the lateral direction, so that, for example, the support arrangement illustrated in Fig. 3 could be applied to the axial support of the roll mantle almost as such. In Fig. 8 the roll axle is denoted with the reference numeral 11 and the roll mantle with the reference numeral 12. The roll mantle 12 is provided with roll ends 13,13a, and in the interior of the roll mantle, axial glide bearing elements 16,16a are fitted, which are supported on the roll axle 11, which act in opposite directions, and which are supported against the inner faces 13',13'a of the roll ends. The construction of the glide bearing elements 16,16a is simpler than that shown in Fig. 3, so that, in the embodiment of Fig. 8 bores have simply been formed into the roll axle 11, into which bores the piston parts of the glide bearing elements 16,16a have been fitted displaceably. Of course, the bores that have been formed into the axle 11 for the glide bearing elements 16,16a are provided with necessary seals 16',16'a. The first axial glide bearing element 16 is connected with a regulation device, which is denoted generally with the reference numeral 100. The regulation device 100 comprises a slide 101,102,103 that has been fitted into the bore 113 formed into the roll axle 11, in which slide the middle part 101 and the end parts 102 and 103 of the slide define flow passages 104,105 between them for the flow of a pressure medium. The three-part slide 101,102,103 of the regulation device is provided with a spindle 107, and on the bottom of the bore 113, underneath the slide 101,102,103, a spring 106 is fitted, which loads the spindle against the piston part of the first axial glide bearing element 16. The glide bearing elements 16,16a are, of course, provided with oil pockets 108,108a, and capillary bores 109,109a have been formed through the glide bearing elements, which bores connect the oil pockets 108,108a with the pressure medium that has been fed to below the glide bearing elements, so that pressure medium has access through the capillary bores 109,109a into the oil pockets 108,108a to form a necessary fluid film between the inner faces 13',13'a of the roll ends and the glide bearing elements 16,16a.

The regulation device 100 communicates with the pressure-medium feed duct 110, which is opened into the annular groove 114 that has been formed into the bore 113 in the regulation device. The axial length of the annular groove 114 and the axial length of the middle part 101 of the three-part slide of the regulation device have been fitted in such a way in relation to one another that in the middle position shown in Fig. 8 the glide bearing elements 16,16a receive their pressure from the feed duct 110 through the flow passages 104,105 and through the connecting duct 111 and the pressure duct 112. The operation of the arrangement as shown in Fig. 8 is such that, when outer axial forces act upon the roll mantle 12, the slide 101,102,103 regulates the pressure passing to the glide bearing elements 16,16a so that said outer axial forces are neutralized. Thus, for example, when the roll mantle 12 moves from the middle position shown in Fig. 8 to the right, the slide 101,102,103 of the regulation device 100 also moves to the right, in which case the middle part 101 of the slide cuts off the pressure connection from the feed duct 110 to the second axial glide bearing element 16a and, correspondingly, opens the pressure connection into the first glide bearing element 16. Thus, underneath the first glide bearing element 16, a pressure is formed, which shifts the roll mantle 12 back to its middle position.

With respect to an alternative and advantageous embodiment of axial support, reference is made in particular to Fig. 2A and to the related description.

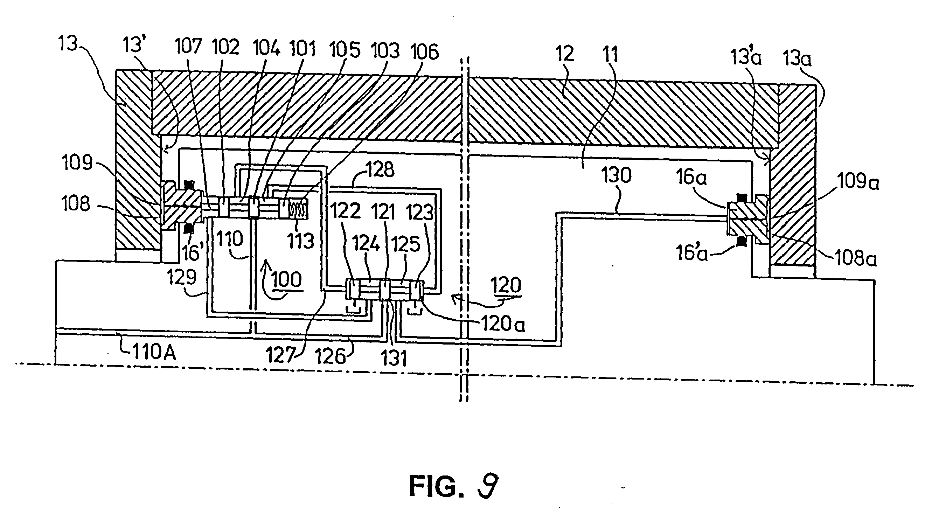

Fig. 9 shows a second embodiment of the axial support of a roll mantle in a roll provided with glide bearings. The embodiment of Fig. 9 differs from that shown in Fig. 8 in the respect that the arrangement of Fig. 9 is additionally provided with a regulationvalve120,whichprovidesapre-control for the control of the movements of the roll mantle 12. Thus, the arrangement of Fig. 9 is to a great extent similar to the arrangement illustrated in Fig. 4 for the transverse support of the roll mantle 12. The roll itself and the axial glide bearing elements 16,16a are similar to those shown in Fig. 8 and further, the regulation device 100 is similar to that described in relation to Fig. 8 so that in these respects, reference is made to the description related to Fig. 8.

The mode of connection of the regulation device 100 itself differs from that shown in Fig. 8 and, as was already stated above, the embodiment of Fig. 9 is additionally provided with a regulation valve 120 which provides a pre-control. The regulation device 120 comprises a bore 120a, which has been formed into the frame of the regulation device and into which a three-part slide 121,122,123 has been fitted. Into the bore 120a in the regulation valve 120, an annular groove 131 has been formed, through which the regulation valve 120 communicates with the pressure-feed duct 126 of the regulation valve and from said duct 126 further with the main duct 110A, through which the pressure medium is also fed into the feed duct 110 and from it further to the regulation device 100. The flow passages 124,125 that are defined by the middle part 121 and the end parts 122 and 123 of the three-part slide of the regulation valve 120 communicate through the pressure ducts 129,130 with the opposite glide bearing elements 16,16a, and further, the flow passages 104,105 defined by the middle part 101 and the end parts 102,103 of the three-part slide of the regulation device 100 communicate through the pressure-control ducts 127,128 with the rear side of the opposite end parts 122,123 of the slide of the regulation valve 120.

The operation of the arrangement as shown in Fig. 9 is as follows. When an outside axial force is applied to the roll, e.g., in the illustration of Fig.9 from the left, the roll mantle 12 and the first axial glide bearing element 16 move to the right in Fig. 9. In such a case, the slide of the regulation device 100 also moves to the right, in which case the middle part 101 of the slide closes the second flow passage 105 of the regulation device 100 and opens the first flow passage 104. In such a case, the pressure and the flow of the pressure medium fed to the regulation device 100 along the feed duct 110 can act, through said first flow passage 104, upon the first pressure-control duct and from it behind the first end part 122 of the regulation valve 120. The pressure shifts the slide 121,122,123 of the regulation valve 120 so that the middle part 121 of the slide closes the flow of the pressure medium to the second glide bearing element 16a and, correspondingly, opens the flow through the first pressure duct 129 to underneath the first axial glide bearing element 16. Thus, underneath the first glide bearing element 16, a higher pressure is effective than underneath the second glide bearing element 16a, in which case this higher pressure shifts the roll mantle 12 in the axial direction to its middle position. It is achieved by means of the arrangement that the outside axial forces acting upon the roll mantle 12 are neutralized. It is a difference of the arrangement of Fig. 9 in comparison to Fig. 8 that the regulation valve 120 provides the arrangement of Fig. 9 with attenuation, in which case the movements of correction of the position of the roll mantle 12 are quite soft, and no substantial axial oscillation movement can occur.

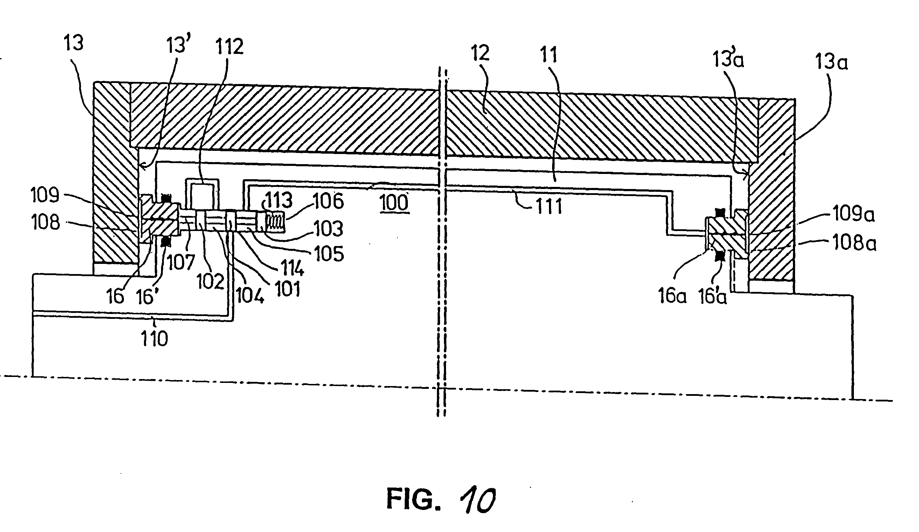

The embodiment shown in Fig. 10 differs from those shown in Figs. 8 and 9 in the respect that the axial glide bearing elements 16,16a are not provided with a hydraulic regulation device 100 corresponding to Figs. 8 and 9 but in the embodiment of Fig. 10 the roll is provided with a position-measurement device 132. In the illustration of Fig. 10 the position-measurement device 132 is fitted behind the first axial glide bearing element 16, and said position-measurement device 132 comprises a frame 136 of the measurement device, into which frame the slide 135 has been fitted displaceably, which slide is provided with a spindle 133. Into the frame 136 of the measurement device, underneath the slide 135, a spring 134 is mounted, which loads the slide 135 so that the spindle 133 is supported against the first glide bearing element 16, in which case the slide 135 of the position-measurement device moves along with the movements of the first axial glide bearing element 16. The embodiment of Fig. 10 is additionally provided with a regulation valve 120 similar to that provided in the arrangement of Fig. 9. The regulation valve 120 distributes the pressure and the flow of the pressure medium coming from the pressure-feed duct 126 through the pressure ducts 129 and 130 to the opposite glide bearing elements 16,16a.

The embodiment of Fig. 10 operates so that, when an outer axial force acts upon the roll mantle 12, e.g., from the left in Fig. 10 this outside force shifts the roll mantle 12 to the right in Fig. 10. In this case, the first glide bearing element 16 and the slide 135 of the position-measurement device 132 also move to the right in a corresponding way. As is shown in the figure, the position-measurement device 132 operates, e.g., electromagnetically, and in such a case it is connected to the regulation valve 120 by the intermediate of an electromagnetic control connection 137. The principle of operation can also be other than electromagnetic. When the slide 135 of the position-measurement device 132 moves to the right, a control is transmitted along the control connection 137 to the regulation valve 120 to shift the slide 121,122,123 of the regulation valve to the right. In such a case, the middle part 121 of the slide of the regulation valve closes the pressure and flow connection to the second axial glide bearing element 16a and, in a corresponding way, opens the connection exclusively to the first axial glide bearing element 16, in which case a higher pressure is formed underneath the first glide bearing element 16, compared with the pressure present underneath the second axial glide bearing element 16a, in which case this higher pressure acts against the outside force and shifts the roll mantle 12 back to its middle position.

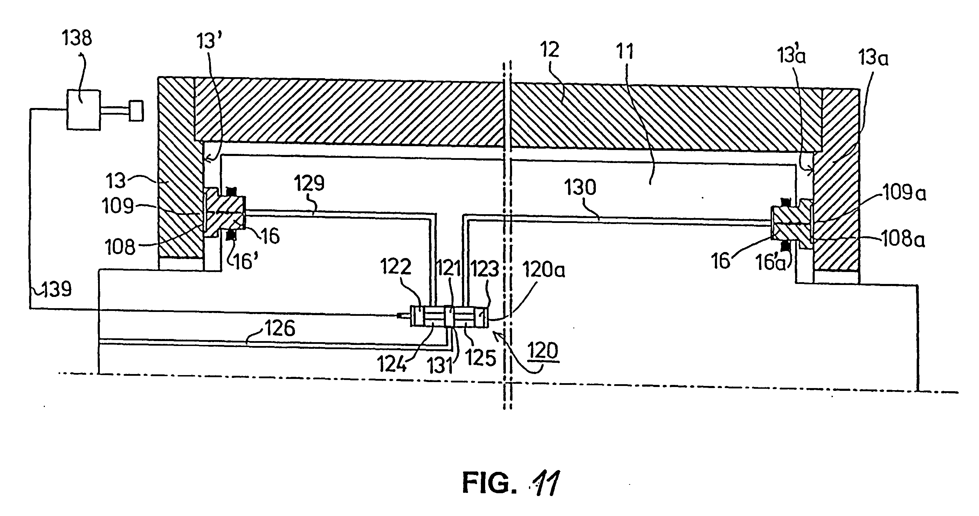

The embodiment of Fig. 11 is identical with that shown in Fig.10 with the exception that in this embodiment the position-measurement device 138 is arranged outside the roll. In a way corresponding to Fig. 6, the position-measurement device 138 is provided either with a contact-free detector or with a detector that is in contact with the roll end 13, so that, when outside axial forces act upon the roll mantle 12, the position-measurement device gives a control command, corresponding to the axial position of the roll mantle 12, by the intermediate of the control connection 139, to the regulation valve 120, whose construction and operation are identical with the regulation valve described in relation to Fig. 10. Thus, the operation of the embodiment as shown in Fig. 11 is fully similar to that described in relation to Fig. 10.

In Figs. 9, 10 and 11 it was described that the regulation valve 120 is fitted inside the roll. The regulation valve 120 can, of course, also be installed outside the roll, while the operation of the arrangement does not differ from what has been described above. In Figs. 8 to 11 the axial glide bearing elements 16,16a are shown quite schematically, and in respect of their construction they may differ from those shown in the figures, while their operation is, nevertheless, similar to that described above. In the above description, the sealing solutions in the roll have not been dealt with either, which solutions can be accomplished in any known way whatsoever.

Above, the invention has been described by way of example with reference to the figures in the accompanying drawing. The invention is, however, not confined to the exemplifying embodiments described in the figures only, but different embodiments of the invention may show variation within the scope of the invention defined in the accompanying patent claims.

## Claims

1. A method for fitting a tubular roll mantle of a roll intended for a paper machine or equivalent with glide bearings, in which method the roll mantle (12) is supported on a stationary roll axle (11) by means of hydraulic glide bearing elements (14,14a, 15,15a,16,16a) acting upon the roll mantle (12) or upon the roll ends (13,13a) of the roll, said bearing elements being loaded hydraulically by means of the pressure of a pressure medium, **characterized in that** the roll mantle (12) is supported on the roll axle (11) by means of glide bearing elements (15,15a;16,16a) acting radially and/or axially in opposite directions, so that, when an outside force that shifts or attempts to shift the roll mantle (12) is applied to the roll mantle (12), the pressure in the glide bearing element (15,15a;16,16a) placed at the side of the higher loading is adjusted to a level higher than the pressure in the glide bearing element acting in the opposite direction so that the outside forces are neutralized.

2. A method as claimed in claim 1, **characterized in that** the pressures in the glide bearing elements (15,15a;16,16a) acting in opposite directions are regulated by means of a regulation device (26,100) or by means of an equivalent regulation valve (40,120), which receives its control directly from the movement of the roll mantle (12).

3. A method as claimed in claim 1 or 2, **characterized in that** the regulation device (26,100) is controlled by means of the movement of one (15,16) of the glide bearing elements acting in opposite directions so as to distribute the pressure and the flow to said glide bearing elements (15,15a; 16,16a).

4. A method as claimed in any of the preceding claims, **characterized in that** a separate regulation valve (40,120) is controlled by means of the pressure of a regulation device (26,100) that is positioned in accordance with the position of the roll mantle (12), by means of which regulation valve the pressure and the flow are distributed in the desired proportion to the glide bearing elements (15, 15a;16,16a) acting in opposite directions.

5. A method as claimed in claim 1, **characterized in that** the position of the roll mantle (12) is measured by means of an electromagnetic or equivalent position-measurement device (52,58,132,138), by whose means a control command required by the position of the roll mantle (12) is given to the regulation valve (40,120) that regulates the position of the roll mantle (12) to distribute the pressure in a certain proportion to the glide bearing elements (15,15a;16,16a) acting in opposite directions.

6. A method as claimed in claim 5 **characterized in that** the position of the roll mantle (12) is measured from inside the roll by the intermediate of a glide bearing element (15,16).

7. A method as claimed in claim 5 **characterized in that** the position of the roll mantle (12) is measured from outside the roll from the outer face of the roll (10).

8. A method as claimed in any of the preceding claims, **characterized in that** the roll mantle (12) is supported radially in the principal loading direction, in particular in the direction of the nip plane, in which direction the roll (10) is supported by means of hydraulic loading elements (17), and in the direction transverse to said direction.

9. A tubular roll for a paper machine or equivalent, the roll mantle (12) of said roll being supported revolvingly on a stationary roll axle (11) by means of glide bearing elements (14,14a;15,15a;16,16a) that act upon the inner face (12') of the roll mantle (12) and/or upon the roll ends (13,13a) of the roll, said glide bearing elements being loaded by means of the pressure of a hydraulic pressure medium, **characterized in that** the roll mantle (12) is supported on the roll axle (11) by means of glide bearing elements (15,15a;16,16a) loaded radially and/or axially in opposite directions, which glide bearing elements are connected with a regulation device (26,100) or with a corresponding regulation valve (40,120), which is arranged to distribute the pressures in the glide bearing elements (15, 15a; 16, 16a) acting in opposite directions so that the force components of the forces applied to the roll mantle (12) from outside that are parallel to the directions of action of the glide bearing elements (15,15a;16,16a) are neutralized.

10. A roll as claimed in claim 9 **characterized in that** the regulation device (26,66,100) or the corresponding regulation valve (40,80,120) is connected to receive its control directly from the movement of the roll mantle (12).

11. A roll as claimed in claim 9 or 10, **characterized in that** the regulation device (26,100) comprises a valve, which is connected in connection with one (15,16) of the glide bearing elements acting in opposite directions, so that the movement of said glide bearing element (15,16) controls the slide in the valve of the regulation device (26,100) so as to distribute the pressure and the flow to the glide bearing elements (15,15a;16,16a).

12. A roll as claimed in any of the claims 9 to 11, **characterized in that** the regulation device (26,100) is arranged to regulate a separate regulation valve (40,120), which distributes the pressure and the flow to the glide bearing elements (15,15a;16,16a) acting in opposite directions.

13. A roll as claimed in claim 9 or 10 **characterized in that** the roll (10) is provided with an electromagnetic or equivalent position-measurement device (52,58;132;138), which is fitted to measure the position of the roll mantle (12) and to give the regulation valve (40,120) that regulates the position of the roll mantle (12) a control command to distribute the pressure in a certain proportion to the glide bearing elements (15,15a;16,16a) acting in opposite directions.

14. A roll as claimed in claim 13 **characterized in that** the position-measurement device (52,132) is fitted inside the roll in connection with a glide bearing element (15,16).

15. A roll as claimed in claim 13 **characterized in that** the position-measurement device (58,138) is fitted outside the roll to measure the position of the roll mantle (12) from the outer face of the roll mantle.

16. A roll as claimed in any of the claims 9 to 15, **characterized in that** the glide bearing elements (14,14a;15,15a) which act radially in opposite directions are arranged in the principal loading direction of the roll, in particular in the direction of the nip plane, in which the roll (10) is supported against loading on the roll axle (11) across its axial length by means of hydraulic loading elements (17), and in the direction transverse to said direction.

## Patentansprüche

1. Verfahren zum Ausstatten eines rohrförmigen Walzenmantels einer für eine Papiermaschine oder dergleichen bestimmten Walze mit Gleitlagern, bei welchem Verfahren der Walzenmantel (12) an einer feststehenden Walzenachse (11) mit Hilfe von hydraulischen Gleitlagerelementen (14, 14a, 15, 15a, 16, 16a) abgestützt wird, die auf den Walzenmantel (12) oder auf die Walzenenden (13, 13a) der Walze wirken, wobei die Lagerelemente mit Hilfe des Drucks eines Druckmittels hydraulisch belastet sind, **dadurch gekennzeichnet, dass** der Walzenmantel (12) an der Walzenachse (11) mit Hilfe von Gleitlagerelementen (15, 15a; 16, 16a) abgestützt ist, die radial und/oder axial in entgegengesetzten Richtungen wirken, so dass, wenn eine äußere Kraft, die den Walzenmantel (12) verschiebt oder zu verschieben versucht, auf den Walzenmantel (12) aufgebracht wird, der Druck in dem Gleitlagerelement (15, 15a; 16, 16a), das auf der Seite der höheren Belastung angeordnet ist, auf einen Wert eingestellt wird, der höher als der Druck in dem Gleitlagerelement ist, das in der entgegengesetzten Richtung wirkt, so dass die äußeren Kräfte neutralisiert werden.

2. Verfahren nach Anspruch 1, **dadurch gekennzeichnet, dass** die Drücke in den in entgegengesetzten Richtungen wirkenden Gleitlagerelementen (15, 15a; 16, 16a) reguliert werden mit Hilfe einer Regulierungsvorrichtung (26, 100) oder mit Hilfe eines gleichwirkenden Regulierungsventils (40, 120), das/die seine/ihre Steuerung direkt aus der Bewegung des Walzenmantels (12) erhält.

3. Verfahren nach Anspruch 1 oder 2, **dadurch gekennzeichnet, dass** die Regulierungsvorrichtung (26, 100) mit Hilfe der Bewegung eines (15, 16) der in entgegengesetzten Richtungen wirkenden Gleitlagerelemente so gesteuert wird, dass sie den Druck und den Durchfluss zu den Gleitlagerelementen (15, 15a; 16, 16a) verteilt.

4. Verfahren nach einem der vorangehenden Ansprüche, **dadurch gekennzeichnet, dass** ein separates Regulierungsventil (40, 120) mit Hilfe des Drucks einer Regulierungsvorrichtung (26, 100) gesteuert wird, die entsprechend der Position des Walzenmantels (12) eingestellt wird, wobei mit Hilfe des Regulierungsventils der Druck und die Strömung im gewünschten Verhältnis auf die in entgegengesetzten Richtungen wirkenden Gleitlagerelemente (15, 15a; 16, 16a) verteilt werden.

5. Verfahren nach Anspruch 1, **dadurch gekennzeichnet, dass** die Position des Walzenmantels (12) mit Hilfe einer elektromagnetischen oder gleichwirkenden Positionsmessvorrichtung (52, 58, 132, 138) gemessen wird, mit deren Hilfe ein aufgrund der Position des Walzenmantels (12) erforderlicher Steuerbefehl auf das die Position des Walzenmantels (12) regulierende Regulierungsventil (40, 120) gegeben wird, damit es den Druck auf die in entgegengesetzten Richtungen wirkenden Gleitlagerelemente (15, 15a; 16, 16a) in einem gewissen Verhältnis verteilt.

6. Verfahren nach Anspruch 5, **dadurch gekennzeichnet, dass** die Position des Walzenmantels (12) mittels eines Gleitlagerelementes (15, 16) von innerhalb der Walze gemessen wird.

7. Verfahren nach Anspruch 5, **dadurch gekennzeichnet, dass** die Position des Walzenmantels (12) von außerhalb der Walze von der Außenfläche der Walze (10) gemessen wird.

8. Verfahren nach einem der vorangehenden Ansprüche, **dadurch gekennzeichnet, dass** der Walzenmantel (12) radial abgestützt ist in der Hauptbelastungsrichtung, insbesondere in der Richtung der Spaltebene, in welcher Richtung die Walze (10) mit Hilfe von hydraulischen Belastungselementen (17) abgestützt ist, und in der dazu quer verlaufenden Richtung.

9. Rohrförmige Walze für eine Papiermaschine oder dergleichen, wobei der Walzenmantel (12) der Walze drehbar an einer feststehenden Walzenachse (11) mit Hilfe von Gleitlagerelementen (14, 14a; 15, 15a; 16, 16a) abgestützt ist, die auf die Innenfläche (12') des Walzenmantels (12) und/oder die Walzenenden (13, 13a) der Walze wirken, wobei die Gleitlagerelemente mit Hilfe des Drucks eines hydraulischen Druckmittels belastet sind, **dadurch gekennzeichnet, dass** der Walzenmantel (12) an der Walzenachse (11) mit Hilfe von Gleitlagerelementen (15, 15a; 16, 16a) abgestützt ist, die radial und/oder axial in entgegengesetzten Richtungen belastet sind, wobei die Gleitlagerelemente verbunden sind mit einer Regulierungsvorrichtung (26, 100) oder mit einem entsprechenden Regulierungsventil (40, 120), das/die zur Verteilung der Drücke in den in entgegengesetzten Richtungen wirkenden Gleitlagerelementen (15, 15a; 16, 16a) so angeordnet ist, dass die zu den Wirkrichtungen der Gleitlagerelemente (15, 15a; 16, 16a) parallelen Kraftkomponenten der auf den Walzenmantel (12) von außen aufgebrachten Kräfte neutralisiert werden.

10. Walze nach Anspruch 9, **dadurch gekennzeichnet, dass** die Regulierungsvorrichtung (26, 66, 100) oder das entsprechende Regulierungsventil (40, 80, 120) so verbunden ist, dass es/sie seine/ihre Steuerung direkt aus der Bewegung des Walzenmantels (12) erhält.

11. Walze nach Anspruch 9 oder 10, **dadurch gekennzeichnet, dass** die Regulierungsvorrichtung (26, 100) ein Ventil aufweist, das in Verbindung mit einem (15, 16) der in entgegengesetzten Richtungen wirkenden Gleitlagerelemente so verbunden ist, dass die Bewegung dieses Gleitlagerelementes (15, 16) den Schieber im Ventil der Regulierungsvorrichtung (26, 100) so steuert, dass er den Druck und die Strömung auf die Gleitlagerelemente (15, 15a; 16, 16a) verteilt.

12. Walze nach einem der Ansprüche 9 bis 11, **dadurch gekennzeichnet, dass** die Regulierungsvorrichtung (26, 100) so angeordnet ist, dass sie ein getrenntes Regulierungsventil (40, 120) reguliert, das den Druck und die Strömung auf die in entgegengesetzten Richtungen wirkenden Gleitlagerelemente (15, 15a; 16, 16a) verteilt.

13. Walze nach Anspruch 9 oder 10, **dadurch gekennzeichnet, dass** die Walze (10) mit einer elektromagnetischen oder gleichwirkenden Positionsmessvorrichtung (52, 58; 132; 138) versehen ist, die vorgesehen ist zum Messen der Position des Walzenmantels (12) und zur Lieferung eines Steuerbefehls an das Regulierungsventil (40, 120), das die Position des Walzenmantels (12) reguliert, damit es den Druck in einem gewissen Verhältnis auf die in entgegengesetzten Richtungen wirkenden Gleitlagerelemente (15, 15a; 16, 16a) verteilt.

14. Walze nach Anspruch 13, **dadurch gekennzeichnet, dass** die Positionsmessvorrichtung (52, 132) innerhalb der Walze in Verbindung mit einem Gleitlagerelement (15, 16) montiert ist.

15. Walze nach Anspruch 13, **dadurch gekennzeichnet, dass** die Positionsmessvorrichtung (58, 138) außerhalb der Walze montiert ist und die Position des Walzenmantels (12) von der Außenfläche des Walzenmantels misst.

16. Walze nach einem der Ansprüche 9 bis 15, **dadurch gekennzeichnet, dass** die in radialer Richtung in entgegengesetzten Richtungen wirkenden Gleitlagerelemente (14, 14a; 15, 15a) in der Hauptbelastungsrichtung der Walze angeordnet sind, insbesondere in der Richtung der Spaltebene, in der die Walze (10) gegen Belastung an der Walzenachse (11) über deren gesamte Länge mit Hilfe von hydraulischen Belastungselementen (17) abgestützt ist, und in der dazu quer verlaufenden Richtung.

## Revendications

1. Procédé de positionnement de l'enveloppe d'un rouleau tubulaire pour machine à papier ou équivalent au moyen de paliers à glissement, procédé dans lequel l'enveloppe (12) de rouleau est supportée par un essieu fixe (11) de rouleau au moyen d'éléments (14, 14a, 15, 15a, 16, 16a) de paliers hydrauliques à glissement agissant sur l'enveloppe (12) de rouleau ou sur les extrémités (13, 13a) du rouleau, lesdits éléments de paliers étant sollicités hydrauliquement au moyen de la pression d'un agent de pression, **caractérisé en ce que** l'enveloppe (12) de rouleau est supportée par l'essieu (11) de rouleau au moyen d'éléments (15, 15a; 16, 16a) de paliers à glissement agissant de manière radiale et/ou axiale dans des directions opposées, de façon que, lorsqu'une force extérieure qui déplace ou tend à déplacer l'enveloppe (12) de rouleau est appliquée à l'enveloppe (12) de rouleau, la pression dans l'élément (15, 15a; 16, 16a) de palier à glissement placé du côté de la sollicitation la plus forte soit réglée à un niveau supérieur à la pression dans l'élément de palier à glissement agissant dans la direction opposée afin que les forces extérieures soient neutralisées.

2. Procédé selon la revendication 1, **caractérisé en ce que** les pressions dans les éléments (15, 15a; 16, 16a) de paliers à glissement agissant dans des directions opposées sont régulées au moyen d'un dispositif de régulation (26, 100) ou au moyen d'une vanne régulatrice équivalente (40, 120) commandée directement par le mouvement de l'enveloppe (12) de rouleau.

3. Procédé selon la revendication 1 ou 2, **caractérisé en ce que** le dispositif de régulation (16, 100) est commandé au moyen du mouvement de l'un des éléments (15, 16) de paliers à glissement agissant dans des directions opposées de manière à répartir la pression et le débit entre lesdits éléments (15, 15a; 16, 16a) de paliers à glissement.

4. Procédé selon l'une quelconque des revendications précédentes, **caractérisé en ce qu'**une vanne régulatrice séparée (40, 120) est commandée au moyen de la pression d'un dispositif de régulation (16, 100) placé en fonction de la position de l'enveloppe (12) de rouleau, vanne régulatrice grâce à laquelle la pression et le débit sont répartis dans la proportion souhaitable entre les éléments (15, 15a; 16, 16a) de paliers à glissement agissant dans des directions opposées.

5. Procédé selon la revendication 1, **caractérisé en ce que** la position de l'enveloppe (12) de rouleau est mesurée au moyen d'un dispositif électromagnétique ou équivalent (52, 58, 132, 138) de mesure de position, grâce à quoi une instruction de commande nécessitée par la position du manteau (12) de rouleau est fournie à la vanne régulatrice (40, 120) qui régule la position de l'enveloppe (12) de rouleau pour répartir la pression dans une certaine proportion entre les éléments (15, 15a; 16, 16a) agissant dans des directions opposées.

6. Procédé selon la revendication 5, **caractérisé en ce que** la position de l'enveloppe (12) de rouleau est mesurée de l'intérieur du rouleau par l'intermédiaire d'un élément (15, 16) de palier à glissement.

7. Procédé selon la revendication 5, **caractérisé en ce que** la position de l'enveloppe (12) de rouleau est mesurée de l'extérieur du rouleau, depuis la face extérieure du rouleau (10).

8. Procédé selon l'une quelconque des revendications précédentes, **caractérisé en ce que** l'enveloppe (12) de rouleau est supportée radialement dans la direction de sollicitation principale, en particulier dans la direction du plan de pincement, direction dans laquelle le rouleau (10) est supporté au moyen d'éléments de sollicitation hydrauliques (17), et dans la direction transversale par rapport à ladite direction.

9. Rouleau tubulaire pour machine à papier ou équivalent, l'enveloppe (12) dudit rouleau étant supportée de manière rotative sur un essieu fixe (11) de rouleau au moyen d'éléments (14, 14a, 15, 15a, 16, 16a) de paliers hydrauliques à glissement qui agissent sur la face interne (12') de l'enveloppe (12) de rouleau et/ou sur les extrémités (13, 13a) du rouleau, lesdits éléments de paliers étant sollicités au moyen de la pression d'un agent de pression hydraulique, **caractérisé en ce que** l'enveloppe (12) de rouleau est supportée par l'essieu (11) de rouleau au moyen d'éléments (15, 15a; 16, 16a) de paliers à glissement sollicités de manière radiale et/ou axiale dans des directions opposées, lesquels éléments de paliers à glissement sont reliés à un dispositif de régulation (26, 100) ou à une vanne régulatrice correspondante (40, 120), qui est conçu pour répartir la pression dans les éléments (15, 15a; 16, 16a) de paliers à glissement agissant dans des directions opposées de façon que les composantes des forces appliquées de l'extérieur à l'enveloppe (12) de rouleau qui sont parallèles aux directions d'action des éléments (15, 15a; 16, 16a) de paliers à glissement soient neutralisées.

10. Rouleau selon la revendication 9, **caractérisé en ce que** le dispositif de régulation (26, 66, 100) de la vanne régulatrice correspondante (40, 80, 120) est monté pour être directement commandé par le mouvement de l'enveloppe (12) de rouleau.

11. Rouleau selon la revendication 9 ou 10, **caractérisé en ce que** le dispositif de régulation (16, 100) comprend une vanne, reliée à l'un (15, 16) des éléments de paliers à glissement agissant dans des directions opposées, de façon que le mouvement dudit élément (15, 16) de palier à glissement commande le glissement dans la vanne du dispositif de régulation (26, 100) afin de répartir la pression et le débit entre les éléments (15, 15a; 16, 16a) de paliers à glissement.

12. Rouleau selon l'une quelconque des revendications 9 à 11, **caractérisé en ce que** le dispositif de régulation (16, 100) est conçu pour réguler une vanne régulatrice séparée (40, 120) qui répartit la pression et le débit entre les éléments (15, 15a; 16, 16a) de paliers à glissement agissant dans des directions opposées.

13. Rouleau selon la revendication 9 ou 10, **caractérisé en ce que** le rouleau est pourvu d'un dispositif électromagnétique ou équivalent (52, 58, 132, 138) de mesure de position, qui est installé pour mesurer la position de l'enveloppe (12) de manteau et pour fournir à la vanne régulatrice (40, 120) qui régule la position de l'enveloppe (12) de rouleau une instruction de commande pour répartir la pression dans une certaine proportion entre les éléments (15, 15a; 16, 16a) agissant dans des directions opposées.

14. Rouleau selon la revendication 13, **caractérisé en ce que** le dispositif de mesure (52, 32) de position est installé à l'intérieur du rouleau en liaison avec un élément (15, 16) de palier à glissement.

15. Rouleau selon la revendication 13, **caractérisé en ce que** le dispositif de mesure (58, 138) de position est installé à l'extérieur de rouleau pour mesurer la position de l'enveloppe (12) de rouleau depuis la face extérieure de l'enveloppe de rouleau.

16. Rouleau selon l'une quelconque des revendications9 à 15, **caractérisé en ce que** les éléments (14, 14a; 15, 15a) de paliers à glissement qui agissent radialement dans des directions opposées sont disposés dans la direction principale de sollicitation du rouleau, en particulier dans la direction du plan de pincement, dans laquelle le rouleau (10) est supporté par l'essieu (11) de rouleau, sur toute sa longueur axiale, pour subir des sollicitations exercées au moyen d'éléments de sollicitation hydrauliques (17), et dans la direction transversale par rapport à ladite direction.
